# EUROPEAN PATENT APPLICATION

(11) **EP 3 993 462 A1**
(43) Date of publication of application: **04.05.2022**
(21) Application number: 21817760.8
(22) Date of filing: 18.05.2021
(51) Int. Cl.: H04W 8/06, H04W 92/24, H04W 48/08

(54) **NETWORK NODE, USER EQUIPMENT, AND METHOD FOR SAME**

(30) Priority: 01.06.2020 JP 2020095520
(71) Applicant: NEC Corporation, 108-8001 Tokyo (JP)
(72) Inventor: TAKAKURA, Tsuyoshi, Tokyo 110-0012 (JP); TAMURA, Toshiyuki, Tokyo 108-8001 (JP)
(74) Representative: MacDougall, Alan John Shaw
(86) International application number: PCT/JP2021/018872
(87) International publication number: WO 2021/246164

(57) **Abstract**

A network node (21) associated with a first Home Public Land Mobile Network (HPLMN) prepares a list indicating at least one Visited PLMN (VPLMN) that is capable of providing an equivalent network slice to a first network slice of the first PLMN (20). In order to cause a User Equipment (UE) (1) whose HPLMN is the first PLMN (20) to prioritize the at least one VPLMN in PLMN selection, the network node (21) sends the list to a User Equipment (UE) (1) via a second PLMN (30). This can, for example, contribute to facilitating the UE to select a VPLMN that is capable of providing a network slice that is equivalent to a particular network slice of its HPLMN.

## Description

### Technical Field

The present disclosure relates to radio communication networks, and in particular to Public Land Mobile Network (PLMN) selection.

### Background Art

The 5G system (5GS) supports network slicing. Network slicing makes it possible to create multiple logical networks on top of physical networks. Each logical network is called a network slice. A network slices provides specific network capabilities and network characteristics. The 3rd Generation Partnership Project (3GPP) has started working on Release 17 in the first quarter of 2020. Enhancement of network slices will be discussed for Release 17.

A network slice is identified by an identifier known as Single Network Slice Selection Assistance Information (S-NSSAI). The S-NSSAI consists of a Slice/Service type (SST) and a Slice Differentiator (SD). The SST refers to the expected network slice behavior in terms of features and services. The SD is optional information and complements the SST to differentiate amongst multiple network slices of the same Slice/Service type.

An S-NSSAI can have standard values or non-standard values. Currently, standard SST values 1, 2, 3, and 4 are associated respectively with enhanced Mobile Broad Band (eMBB), Ultra Reliable and Low Latency Communication (URLLC), Massive Internet of Things (MIoT), and Vehicle to Everything (V2X) slice types. Anon-standard value of an S-NSSAI with identifies a single network slice within a specific Public Land Mobile Network (PLMN). In other words, non-standard values are PLMN-specific values, and associated with the PLMN ID of a PLMN that has assigned them. Each S-NSSAI assists the network in selecting a particular NSI. A NSI may be selected via different S-NSSAIs. An S-NSSAI may be associated with different NSIs. A network slice may be uniquely identified by an S-NSSAI.

There are two types of S-NSSAI, known as S-NSSAI and Mapped S-NSSAI. An S-NSSAI identifies a network slice provided by a Public Land Mobile Network (PLMN) to which a UE is connected. Accordingly, when the UE is in its home network, an S-NSSAI identifies a network slice of the home network. While roaming, an S-NSSAI identifies a network slice of the roaming network. A Mapped S-NSSAI may be an S-NSSAI of the Home PLMN (HPLMN) that is mapped to (associated with, or applicable to) an S-NSSAI that identifies a network slice of the roaming network when the UE is roaming, and may also be an S-NSSAI included in the subscriber information of the UE.

A UE 1 sets an S-NSSAI Value in a Requested NSSAI information element in a Non-Access Stratum (NAS) registration request message. The S-NSSAI Value consists of an S-NSSAI or of an S-NSSAI and a Mapped S-NSSAI.

Hereafter, in this specification, Mapped S-NSSAI may be read as HPLMN S-NSSAI. Also, S-NSSAI may be read as VPLMN S-NSSAI.

Non-Patent Literature 1 discloses a study to support the Generic Network Slice Template (GST) attributes proposed by the GSM Association (GSMA) in the 5G system (5GS). The GST is documented in Non-Patent Literature 2. The GST is a set of attributes that can characterize a type of network slice/service. The GST is generic and is not related to any specific network deployment. Several Network Slice Types (NESTs) can be derived from the GST by assigning values to the applicable attributes defined in the GST. In other words, a NEST is a GST filled with values. The attributes and their values are assigned to satisfy a set of requirements derived from a use case of a Network Slice Customer (NSC). Specifically, an NSC (e.g., automotive, industry 4.0 vertical) provides requirements for its desired use case to a Network Slice Provider (NSP). The NSP maps these requirements, along with the appropriate values to generate NESTs, into attributes of the GST.

One of the attributes of the GST documented in the Non-Patent Literature 2 is "area of service". This attribute specifies the area where the terminals can access a particular network slice. Therefore, this attribute specifies the list of the countries where the service will be provided. The list is unique to NSPs and their roaming agreements. If the list contains more than one entry, roaming agreements between Home PLMNs (HPLMNs) and Visited PLMNs (VPLMNs) are required.

Non-Patent Literature 1 in Section 5.8 describes the impact of the area of service attribute of the GST on PLMN selection in roaming. Specifically, it is assumed that a Single Network Slice Selection Assistance Information (S-NSSAI) of the HPLMN is available only in certain (v)PLMNs in the country where the terminal (i.e., User Equipment (UE)) is roaming. The S-NSSAI is an identifier of a network slice. In this case, the UE has to select a PLMN(s) with no awareness as to whether the (v)PLMN supports the S-NSSAI of the HPLMN or not. The UE cannot know whether a selected (v)PLMN supports the S-NSSAI of the HPLMN until it attempts to register with the selected (v)PLMN and is allowed an S-NSSAI in the (v)PLMN or is provided with a Configured NSSAI in the (v)PLMN. For this reason, Non-Patent Literature 1 suggests that the 3GPP needs to discuss whether and how to support S-NSSAI-aware PLMN selection.

The PLMN selection in the 5GS is described, for example, in Non-Patent Literature 3. Non-Patent Literature 3 further specifies Steering of Roaming (SOR). SOR allows an HPLMN to update through a VPLMN an " Operator Controlled PLMN Selector with Access Technology" list that is used by a roaming UE for PLMN selection.

### Citation List

### Non Patent Literature

[Non-Patent Literature 1] 3GPP TR 23.700-40 V0.3.0 (2020-01) "3rd Generation Partnership Project; Technical Specification Group Services and System Aspects; Study on enhancement of network slicing; Phase 2 (Release 17)", January 2020 [Non-Patent Literature 2] GSM Association Official Document NG.116, " Generic Network Slice Template Version 2.0", October 2019 [Non-Patent Literature 3] 3GPP TS 23.122 V16.5.0 (2020-03) "3rd Generation Partnership Project; Technical Specification Group Core Network and Terminals; Non-Access-Stratum (NAS) functions related to Mobile Station (MS) in idle mode (Release 16)", March 2020

### Summary of Invention

### Technical Problem

At present, it is not clear how the 5GS will support S-NSSAI-aware PLMN selection. For example, a UE may wish to use a particular communication service provided by a particular network slice of the HPLMN, outside the coverage of the HPLMN (e.g., in a foreign country different from the country of the HPLMN). However, the UE has to make PLMN selection without knowing which VPLMN outside the coverage such particular communication service is available in.

One of the objects to be attained by embodiments disclosed herein is to provide apparatuses, methods, and programs that contribute to facilitating a UE to select a VPLMN that is capable of providing a network slice equivalent to a particular network slice of its HPLMN. It should be noted that this object is merely one of the objects to be attained by the embodiments disclosed herein. Other objects or problems and novel features will be made apparent from the following description and the accompanying drawings.

### Solution to Problem

In a first aspect, a network node associated with a first PLMN includes at least one memory and at least one processor coupled to the at least one memory. The at least one processor is configured to prepare a list indicating at least one VPLMN that is capable of providing an equivalent network slice to a first network slice of the first PLMN. The at least one processor is further configured to send the list to a UE via a second PLMN to cause the UE to prioritize the at least one VPLMN in PLMN selection. Here, the first PLMN is an HPLMN of the UE, while the second PLMN is a PLMN different from the first PLMN.

In a second aspect, a UE includes at least one memory and at least one processor coupled to the at least one memory. The at least one processor is configured to send an indication indicating that the UE prefers Public Land Mobile Network (PLMN) selection that prioritizes network slice availability, to a network node of a first PLMN that is an HPLMN of the UE, via a second PLMN that is different from the first PLMN.

In a third aspect, a method performed by a network node associated with a first PLMN includes the steps of: (a) preparing a list indicating at least one VPLMN that is capable of providing an equivalent network slice to a first network slice of the first PLMN; and (b) sending the list to a UE via a second PLMN to cause the UE to prioritize the at least one VPLMN in PLMN selection. Here, the first PLMN is an HPLMN of the UE, while the second PLMN is a PLMN different from the first PLMN.

In a fourth aspect, a method performed by a UE includes sending an indication indicating that the UE prefers Public Land Mobile Network (PLMN) selection that prioritizes network slice availability, to a network node of a first PLMN that is an HPLMN of the UE, via a second PLMN that is different from the first PLMN.

In a fifth aspect, a program includes instructions (software codes) that, when loaded into a computer, cause the computer to perform the method according to the above-described third or fourth aspect.

### Advantageous Effects of Invention

According to the above-described aspects, it is possible to provide apparatuses, methods, and programs that contribute to facilitating a UE to select a VPLMN that is capable of providing a network slice equivalent to a particular network slice of its HPLMN.

### Brief Description of Drawings

Figure 1 is a diagram showing a configuration example of a cellular network according to an embodiment;
Figure 2 is a diagram showing a configuration example of a cellular network according to an embodiment;
Figure 3 is a flowchart showing an example of operation of a UDM according to an embodiment;
Figure 4 is a sequence diagram showing an example of signaling according to an embodiment;
Figure 5 is a sequence diagram showing an example of signaling according to an embodiment;
Figure 6 is a block diagram showing a configuration example of a UE according to an embodiment; and
Figure 7 is a block diagram showing a configuration example of a UDM according to an embodiment.

### Description of Embodiments

Specific embodiments will be described hereinafter in detail with reference to the drawings. The same or corresponding elements are denoted by the same symbols throughout the drawings, and duplicated explanations are omitted as necessary for the sake of clarity.

Each of the embodiments described below may be used individually, or two or more of the embodiments may be appropriately combined with one another. These embodiments include novel features different from each other. Accordingly, these embodiments contribute to attaining objects or solving problems different from one another and contribute to obtaining advantages different from one another.

The following descriptions on the embodiments mainly focus on the 3GPP fifth generation mobile communication system (5G system (5GS)). However, these embodiments may be applied to other cellular communication systems that support network slicing similar to that of the 5GS.

### First Embodiment

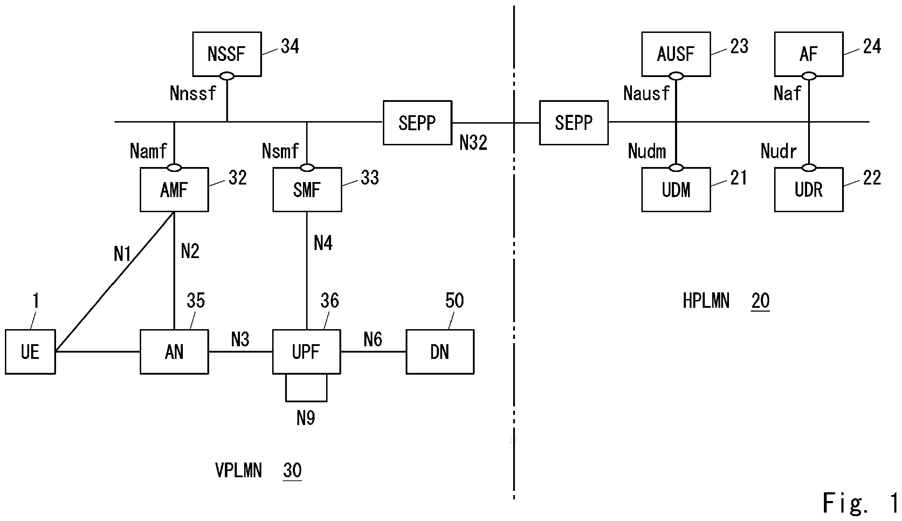

Figure 1 shows a configuration example of a radio communication network (i.e., 5GS) according to the present embodiment. Each of the elements shown in Figure 1 is a network function and provides an interface as defined by the 3rd Generation Partnership Project (3GPP). Each of the elements (network functions) shown in Figure 1 can be implemented, for example, as a network element on dedicated hardware, as a software instance running on dedicated hardware, or as a virtual function instantiated on an application platform.

As is well known, a HPLMN 20 is a PLMN whose Mobile Country Code (MCC) and Mobile Network Code (MNC) of its PLMN identity match the MCC and MNC of the International Mobile Subscriber Identity (IMSI) of a UE 1. The IMSI is stored in a Universal Subscriber Identity Module (USIM).

The USIM of the UE 1 may contain an Equivalent HPLMN (EHPLMN) list. The EHPLMN list enables configuration (or provision) of multiple HPLMN codes. PLMN codes present in the EHPLMN list are replaced with the HPLMN code derived from the IMSI for the purpose of PLMN selection. The EHPLMN list may include the HPLMN code derived from the IMSI. This disclosure does not distinguish between the HPLMN and the EHPLMN, unless otherwise noted. In other words, in this disclosure, unless otherwise stated, the term HPLMN means a strict HPLMN or an EHPLMN.

On the other hand, a VPLMN 30 is a PLMN different from the HPLMN (if the EHPLMN list does not exist or is empty) or from the EHPLMNs (if the EHPLMN list exists).

The UE 1 may be referred to as a radio terminal, a mobile terminal, a mobile station, or any other name. The UE 1 uses 5G connectivity services provided by the HPLMN 20 and the VPLMN 30 to communicate with a DN 50. The DN 50 may be the Internet or any other service network. Figure 1 shows the roaming with local breakout architecture. In the " local breakout" scenario, user data traffic of the UE 1 is routed directly to and from the Data Network (DN) 50 via the VPLMN 30. Alternatively, the "home routed" scenario may be applied. In the "home routed" scenario, the user data traffic is routed from the VPLMN 30 to the HPLMN 20 before being routed to the DN 50.

More specifically, the UE 1 is connected to an access network (i.e., 5G Access Network (5GAN)) 35 and communicates with the DN 50 via a User Plane Function (UPF) 36 in a core network (i.e., 5G core network (5GC)) of the VPLMN 30. The AN 35 may include a Next Generation Radio Access Network (NG-RAN) or a non-3GPP AN, or both. The non-3GPP AN may be a network that handles wireless LAN (WiFi) communications or a network that handles wired communications, referred to as a Wireline 5G Access Network (W-5GAN). The UPF 36 may include multiple UPFs that are interconnected.

In the 5G architecture, the connectivity service between the UE 1 and the DN 50 is supported by one or more Protocol Data Unit (PDU) sessions. A PDU session is an association, session, or connection between the UE 1 and the DN50. A PDU session is used to provide a PDU connectivity service (i.e., an exchange of PDUs between the UE 1 and the DN 50). The UE 1 establishes one or more PDU sessions between the UE 1 and the UPF 36 (i.e., the PDU session anchor) to which the DN 50 is connected. In terms of data transfer, a PDU session consists of a tunnel in the 5GC (N9 tunnel), a tunnel between the 5GC and the AN 35 (N3 tunnel) and one or more radio bearers. Although not shown in Figure 1, the UE 1 may establish multiple PDU sessions with multiple UPFs (PDU session anchors) 36 in order to concurrently access multiple DNs 50.

The AMF 32 is one of the network functions in the 5GC control plane of the VPLMN 30. The AMF 32 provides the termination of a RAN Control Plane (CP) interface (i.e., N2 interface). The AMF 32 terminates a single signalling connection (i.e., N1 NAS signalling connection) with the UE 1 and provides registration management, connection management, and mobility management. The AMF 32 provides NF services to NF consumers (e.g., other AMFs and Session Management Function (SMF) 33) on a service-based interface (i.e., Namf interface). The NF services provided by the AMF 32 include a communication service (Namf_Communication). In addition, the AMF 32 uses NF services provided by other NFs (e.g., Network Slice Selection Function (NSSF) 34 in the VPLMN 30, and Unified Data Management (UDM) 21 in the HPLMN 20).

The SMF 33 is one of the network functions in the 5GC Control Plane of the VPLMN 30. The SMF 33 manages PDU sessions. The SMF 33 sends and receives SM signalling messages (NAS-SM messages, N1 SM messages) to and from the Non-Access-Stratum (NAS) Session Management (SM) layer of the UE 1 via communication services provided by the AMF 32. The SMF 33 provides NF services on a service-based interface (i.e., Nsmf interface) to NF consumers (e.g., AMF 32, other SMFs). The NF services provided by the SMF 33 include a PDU session management service (Nsmf_PDUSession), which allows the NF consumer (e.g., AMF 32) to handle PDU sessions. The SMF 33 may be an Intermediate SMF (I-SMF). The I-SMF is inserted between the AMF 32 and an original SMF as needed when the UPF 36 belongs to a different SMF service area and cannot be controlled by the original SMF.

The NSSF 34 is one of the network functions in the 5GC Control Plane of the VPLMN 30. The AMF 32 or NSSF 34 determines the mapping of a Configured NSSAI for the serving PLMN (i.e., VPLMN 30) to HPLMN Subscribed S-NSSAI(s). In addition, the AMF 32 or NSSF 34 determines the mapping of an Allowed NSSAI for the serving PLMN (i.e., VPLMN 30) to HPLMN Subscribed S-NSSAI(s). The Configured NSSAI is provisioned in the UE 1 by the serving PLMN (i.e., VPLMN 30) during a registration procedure or a UE Configuration Update procedure. The Configured NSSAI includes one or more S-NSSAIs, each of which is applicable to one or more PLMNs. On the other hand, the Allowed NSSAI indicates one or more S-NSSAIs that the UE 1 can use in its current registration area of the serving PLMN (i.e., VPLMN 30). The Allowed NSSAI is provisioned in the UE 1 by the serving PLMN (i.e., VPLMN 30), for example, during a registration procedure.

The UDM 21 is one of the network functions in the 5GC Control Plane of the HPLMN 20. The UDM 21 provides access to a database (i.e., User Data Repository (UDR) 22) storing subscriber data (subscription information). The UDM 21 provides NF services on a service-based interface (i.e., Nudm interface) to NF consumers (e.g., AMF 32 of the VPLMN 30, SMF 33 of the VPLMN 30, and Authentication Server Function (AUSF) 23 of the HPLMN 20). The NF services provided by the UDM 21 include a subscriber data management service, which allows the NF consumer to retrieve subscriber data and provides updated subscriber data to the NF consumer.

The network function that stores subscriber data (subscription information) may be the UDM 21, or it may be a UDR 22. If the network operator's network design or operation policy uses a split architecture that separates data management and data repository, then the UDR 22 may be used to store subscriber data. On the other hand, if a split architecture is not used, the UDM 21 may be used to store subscriber data. In this specification, the network function that stores subscriber data may be UDM 21 or UDR 22. In this specification, UDM 21 and UDR 22 may be referred to interchangeably.

The AUSF 23 is one of the network functions in the 5GC Control Plane. The AUSF 23 provides NF services to NF consumers (e.g., AMF 32 in the VPLMN 30, UDM 21 in the HPLMN 20) on a service-based interface (i.e., Nausf interface). The NF services provided by the AUSF 23 include a Nausf_SoRProtection service, which provides the UDM 21 with security parameters to protect Steering of Roaming (SOR) information. The SOR information is information that contains at least a list indicating at least one VPLMN. The list may indicate at least one VPLMN that is capable of providing a particular communication service provided by a particular network slice of the HPLMN 20. Specific examples of the SOR information are described later.

An Application Function (AF) 24 interacts with the 5GC of the HPLMN 20 to provide services. The AF 24 may include a Steering of Roaming AF (SOR-AF). The SOR-AF may send (or provide) a list of preferred PLMN/access technology combinations or a secured packet to the UDM 21. The secured packet includes a list of preferred PLMN/access technology combinations encapsulated with a security algorithm for (U)SIM applications.

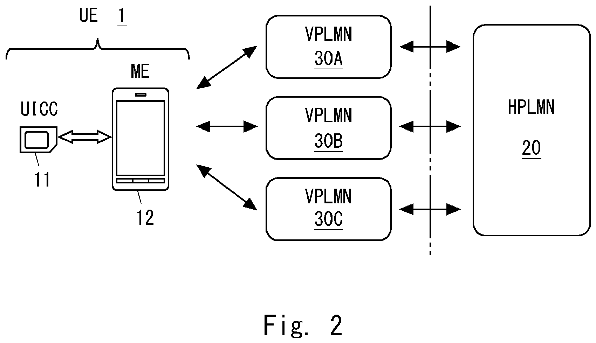

Figure 2 shows a conceptual diagram of PLMN selection by the UE 1. The UE 1 selects a VPLMN from among multiple VPLMNs (e.g., VPLMNs 30A, 30B, and 30C) that have roaming agreements with the HPLMN 20 and attempts to register with the selected VPLMN. The UE 1 includes a Universal Integrated Circuit Card (UICC) 11 and a Mobile Equipment (ME) 12, where the UICC 11 includes a USIM. The UICC 11 (USIM) may be an embedded UICC (embedded USIM) or an integrated UICC (integrated USIM).

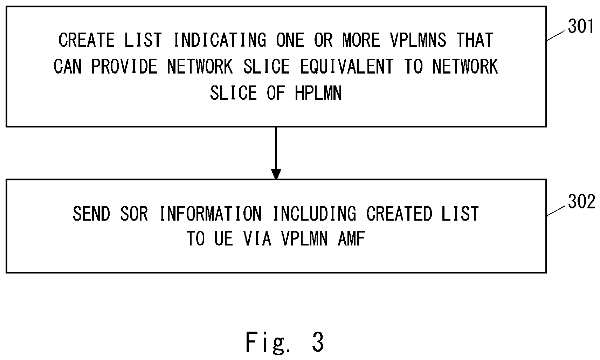

Figure 3 shows an example of the Steering of Roaming operation performed by the UDM 21 of the HPLMN 20. In step 301, the UDM 21 prepares a list indicating one or more VPLMNs that are capable of providing a network slice equivalent to a particular network slice of the HPLMN 20. In this specification, a network slice of a VPLMN that is equivalent to a particular network slice of the HPLMN 20 may mean a VPLMN network slice that is capable of providing a particular communication service provided by the particular network slice of the HPLMN 20. Alternatively, in this specification, a network slice of a VPLMN equivalent to a particular network slice of the HPLMN 20 may mean a VPLMN network slice to which the particular network slice of the HPLMN 20 is mapped. Alternatively, in this specification, a network slice of a VPLMN equivalent to a particular network slice of the HPLMN 20 may mean a VPLMN network slice that provides network capabilities or network characteristics or both equivalent to those of the particular network slice of the HPLMN 20. Alternatively, in this specification, a network slice of a VPLMN equivalent to a particular network slice of the HPLMN 20 may mean a VPLMN network slice of the same type as the particular network slice of the HPLMN 20. Alternatively, in this specification, a network slice of a VPLMN equivalent to a particular network slice of the HPLMN 20 may mean a network slice of a VPLMN that supports a network slice defined in the subscription information of the UE 1. Here, the network slice specified in the subscription information may be identified by a Subscribed S-NSSAI contained in the subscription information of the U E 1 held by the UDM 21 (or UDR 22). Furthermore, the network slice of the VPLMN that supports a network slice specified in the subscription information of the UE 1 may mean an S-NSSAI that is mapped to that Subscribed S-NSSAI in the VPLMN.

The list may indicate a combination of VPLMN and access technology. In other words, the list may be a list of preferred PLMN/access technology combinations. The UDM 21 may prepare a secured packet. The secure packet contains a list of preferred PLMN/access technology combinations encapsulated with a security algorithm for (U)SIM applications.

The UDM 21 may create a list of preferred PLMN/access technology combinations (or a secured packet) by itself. Alternatively, the UDM 21 may interact with the SOR-AF 24 to prepare a list of preferred PLMN/access technology combinations (or secured packet). The UDM 21 may receive a list of preferred PLMN/access technology combinations (or a secured packet) from the SOR-AF 24. In other words, the SOR-AF 24 may create a list of preferred PLMN/access technology combinations (or secured packet) and provide it to the UDM 21.

The UDM 21 (or SOR-AF 24) may include in the list in step 301 a VPLMN(s) that can provide a network slice that is equivalent to a particular network slice of the HPLMN 20 that the UE 1 expects (or wishes). More specifically, if the UE 1 expects (or wishes) to use a particular network slice of the HPLMN 20, the UDM 21 (or SOR-AF 24) may include in the list of step 301 a VPLMN(s) capable of providing an equivalent network slice to that particular network slice of the HPLMN 20. If the UE 1 expects (or wishes) to use a particular communication service provided by a particular network slice of the HPLMN 20, the UDM 21 (or SOR-AF 24) may include in the list in step 301 a VPLMN(s) capable of providing that communication service.

In step 302, the UDM 21 sends SOR information to the UE 1 via the AMF 32 of the VPLMN 30. The SOR information includes the list (i.e., the list of preferred PLMN/access technology combinations or the secured packet) created in step 301. This list causes the UE 1 to give preference in PLMN selection to the one or more VPLMNs that can provide a network slice equivalent to the particular network slice of the HPLMN 20.

The UDM 21 may use the Nausf_SoRProtection service provided by the AUSF 23 to send the SOR information. Specifically, the UDM 21 may receive security parameters for protecting the SOR information from the AUSF 23 and sends the list (i.e., the list of preferred PLMN/access technology combinations or the secured packet) created in step 301 along with these security parameters. The security parameters include a message authentication code (MAC) value (i.e., SoR-MAC-I_{AUSF}) and a counter value (i.e., Counter_{SoR}).

The UE 1 may update an "Operator Controlled PLMN Selector with Access Technology" list stored in the UICC 11 (USIM) or ME 12 with the received list of preferred PLMN/access technology combinations. More specifically, the UE 1 may update the highest priority entries in the "Operator Controlled PLMN Selector with Access Technology" list with the received list of preferred PLMN/access technology combinations. The "Operator Controlled PLMN Selector with Access Technology" list is one of the PLMN lists used by the UE 1 for PLMN selection. The "Operator Controlled PLMN Selector with Access Technology" list (or data file) is determined by a Network Operator (NOP) of the HPLMN 20 and defines preferred PLMNs of the NOP in priority order.

Alternatively, the UE 1 may update another PLMN list different from the "Operator Controlled PLMN Selector with Access Technology" list. For example, the UE 1 may update a "User Controlled PLMN Selector with Access Technology" list with the list of preferred PLMN/access technology combinations received from the UDM 21 of the HPLMN 20. More specifically, the UE 1 may update the highest priority entries in the "User Controlled PLMN Selector with Access Technology" list with the received list of preferred PLMN/access technology combinations. The "User Controlled PLMN Selector with Access Technology" list (or data file) is determined by a user of the UE 1 and defines preferred PLMNs for that user in priority order. The "User Controlled PLMN Selector with Access Technology" list is stored in the UICC 11 (USIM).

The UE 1 may manage the "Operator Controlled PLMN Selector with Access Technology" list or a similar list of PLMNs, per network slice of the HPLMN 20. Specifically, if the UE 1 desires a particular network slice of the HPLMN 20 (or an equivalent network slice thereof), the UE 1 uses the PLMN list for that particular network slice in PLMN selection. In this case, the list sent from the HPLMN UDM 21 to the UE 1 in step 302 may be unique to the particular network slice of the HPLMN 20. In other words, the list sent in step 302 may be associated with the particular network slice of the HPLMN 20. The UE 1 uses the list received in step 302 to update the PLMN list for the specific network slice. If the UE 1 receives lists for individual network slices of the HPLMN 20 in step 302, the UE 1 performs PLMN selection using one of the lists at its discretion. The UE 1 may update the PLMN list for the particular network slice using the received list and then make the PLMN selection.

The UE 1 may hold a "Slice-aware PLMN selector with Access Technology" data file that is different from the "Operator Controlled PLMN Selector with Access Technology" data file and the "User Controlled PLMN Selector with Access Technology" data file. In this case, if the UE 1 is expecting (or preferring) to use a particular communication service provided by a particular network slice of the HPLMN 20 when PLMN selection is made, the UE NAS may select a PLMN based on the "Slice-aware PLMN selector with Access Technology " data file. The "Slice-aware PLMN selector with Access Technology" data file may be pre-stored in the UE 1 (UICC 11 (USIM) or ME 12) or may be provided to the UE 1 directly or via an operator before or when the provider of that particular communication service (Communication Service Provider (CSP)) provides the service to the UE 1.

The UE 1 may perform PLMN selection based on the "Slice-aware PLMN selector with Access Technology" data file when using the particular communication service provided by the particular network slice of the HPLMN 20. For example, the UE 1 may update the "Slice-aware PLMN selector with Access Technology" list with the list of preferred PLMN/access technology combinations received from the UDM 21. More specifically, the UE 1 may update the highest priority entries in the "Slice-aware PLMN selector with Access Technology" list with the received list of preferred PLMN/access technology combinations. The "Slice-aware PLMN selector with Access Technology" list (or data file) is determined by a Communication Service Provider (CSP) that provides the specific communication services provided by the particular network slice of the HPLMN 20 and it defines preferred PLMNs of that CSP in priority order. The "Slice-aware PLMN selector with Access Technology" list is stored in the UICC 11 (USIM).

According to the procedure in Figure 3, the HPLMN 20 can facilitate the UE 1 in roaming to select a VPLMN capable of providing a network slice equivalent to the particular network slice of the HPLMN 20. In other words, the HPLMN 20 can facilitate the UE 1 in roaming to select a VPLMN in which the particular communication service provided in the particular network slice of the HPLMN 20 is available.

The procedure in Figure 3 may be performed during a registration procedure of the UE 1 to any VPLMN. Alternatively, the procedure in Figure 3 may be performed at the initiative of the HPLMN after the UE 1 has registered with any VPLMN. Specifically, the UDM 21 may send the SOR information to the UE 1 in a DL NAS Transport message via that VPLMN (e.g., AMF 32).

In some implementations, if the UDM 21 receives the identifier (e.g., S-NSSAI) of a particular network slice (referred to as the first network slice) of the HPLMN 20 from the UE 1 via any VPLMN (e.g., VPLMN 30A) in a registration procedure of the UE 1 to this VPLMN (e.g., VPLMN 30 A) and the VPLMN (e.g., VPLMN 30 A) does not provide an equivalent network slice to the first network slice, then the UDM 21 may send the list of step 301 to the UE 1

In some implementations, the subscription data of the UE 1 stored in the UDR 22 (or UDM 21) may contain priority information for HPLMN network slices. This priority information indicates the priorities among a plurality of HPLMN network slices. In this case, the UDM 21 may determine whether or not to send the list of step 301 to the UE 1 based on this priority information contained in the subscription data of the UE 1. For example, if the UE 1 requests a second network slice of the HPLMN 20 in addition to the first network slice, if the subscription data (priority information) indicates that the first network slice has priority over the second network slice, and if the serving VPLMN (e.g., VPLMN 30A) does not provide a network slice that is equivalent to the first network slice, then the UDM 21 may send the list of step 301 to the UE 1. Alternatively, the UDM 21 may send the list of step 301 to the UE 1 if the UE 1 requests a second network slice of the HPLMN 20 in addition to the first network slice and the subscription data (priority information) indicates that the first network slice has priority over the second network slice.

In some implementations, the UDM 21 may send the list of step 301 to the UE 1 when it receives from the UE 1 via any VPLMN (e.g., VPLMN 30A) an indication that the UE 1 prefers PLMN selection that prioritizes network slice availability. The PLMN selection that prioritizes network slice availability may be referred to as slice-aware PLMN selection. The indication may be referred to as an indication of slice-aware PLMN selection.

In some implementations, an "Operator Controlled PLMN Selector with Access Technology" list or similar list of PLMNs may include a registration of a non-public network (NPN). An NPN may be a Standalone NPN (SNPN) or a Public Network Integrated NPN (PNI-NPN). When an NPN is deployed as an SNPN, the NPN does not rely on the network functions provided by a PLMN. When an NPN is deployed as a PNI-NPN, the NPN is made available via a PLMN. Specifically, to indicate an SNPN, the "Operator Controlled PLMN Selector with Access Technology" list or similar list of PLMNs may include a Network identifier (NID) in addition to the PLMN ID. Meanwhile, to indicate a PNI-NPN, the "Operator Controlled PLMN Selector with Access Technology" list or similar list of PLMNs may include a Closed Access Group (CAG) identifier in addition to the PLMN ID.

### Second Embodiment

Configuration examples of a radio communication network according to the present embodiment are the same as those shown in Figures 1 and 2. This embodiment provides a specific example of the transmission of SOR information from the UDM 21 to the UE 1.

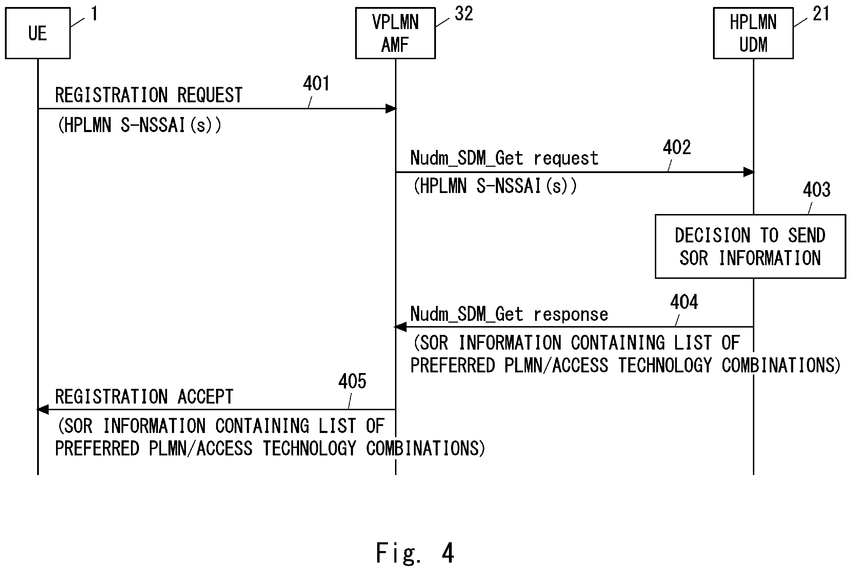

Figure 4 shows an example of the SOR information transmission in the present embodiment. In step 401, the UE 1 sends a Non-Access Stratum (NAS) registration request message to the VPLMN AMF 32. The NAS registration request message contains at least one HPLMN network slice identifier (i.e., HPLMN S-NSSAI(s)). The NAS registration request message may be one of "initial registration", "periodic registration updating", or "mobility registration updating". In one example, the HPLMN S-NSSAI(s) may be included in a Mapping Of Requested NSSAI in the NAS registration request message. The inclusion of HPLMN S-NSSAI(s) in the Mapping Of Requested NSSAIs may mean that the HPLMN S-NSSAI(s) is set in the Mapped S-NSSAI of the Requested NSSAI. Usually, when an HPLMN S-NSSAI(s) is included in a NAS registration request message as a Mapping Of Requested NSSAI, the S-NSSAI Value is composed of the HPLMN S-NSSAI(s) as a Mapped S-NSSAI and the corresponding VPLMN S-NSSAI. However, if the UE 1 has an HPLMN S-NSSAI(s) for an established PDU session(s), the UE 1 may include only this HPLMN S-NSSAI(s) in the Mapping Of Requested NSSAI in the NAS registration request message without setting the corresponding VPLMN S-NSSAI(s) in the configuration of the S-NSSAI Value.

In some implementations, the UE 1 may set HPLMN S-NSSAIs in priority order (decreasing order) in a Requested NSSAI included in the NAS registration request message. In some implementations, the UE 1 may set an HPLMN S-NSSAI in the Requested NSSAI along with data indicating that it is a required network slice (mandatory) or other (optional) as the UE 1.

In step 402, the VPLMN AMF 32 performs (or invokes) a Nudm_SDM_Get service operation to the HPLMN UDM 21 to obtain the subscriber data of the UE 1. The message (Nudm_SDM_Get request) sent from the AMF 32 to the UDM 21 in step 402 indicates the HPLMN S-NSSAI(s) sent by the UE 1. In some implementations, the AMF 32 may include an access technology type to indicate the access technology with which the UE 1 communicates with the AN 35, into the message sent from the AMF 32 to the UDM 21 (Nudm_SDM_Get request). In some implementations, the AMF 32 may include location information about the UE 1 into the message sent from the AMF 32 to the UDM 21 (Nudm_SDM_Get request). The location information about the UE 1 may be the VPLMN ID of the VPLMN including the MCC and MNC, the MCC of the VPLMN ID, the E-UTRAN Cell Global Identification (ECGI) of the AN 35 to which the UE 1 is connected, the NR Cell Global Identity (NCGI) of the AN 35 to which the UE 1 is connected, or any other information indicating a region.

In step 403, the HPLMN UDM 21 decides whether or not to send SOR information to the UE 1. In some implementations, the UDM 21 may decide to send the SOR information to the UE 1 if no network slice equivalent to the at least one network slice identified by the HPLMN S-NSSAI(s) sent by the UE 1 is provided by the serving VPLMN. The SOR information includes a list of preferred PLMN/access technology combinations (or a secured packet). The list of preferred PLMN/access technology combinations indicates at least one VPLMN that can provide a network slice equivalent to the at least one network slice identified by the HPLMN S-NSSAI(s) sent by the UE 1.

In some implementations, the UDM 21 may decide to send the SOR information including optimal PLMN information for the at least one network slice identified by the HPLMN S-NSSAI(s) sent by the UE 1 to the UE 1. The UDM 21 may decide to send such SOR information if the UE 1's subscription data indicates that SOR information including optimal PLMN information for network slices is to be sent.

In some implementations, the UDM 21 may decide to send the SOR information to the UE 1 based on the priority order (decreasing order) of the HPLMN S-NSSAI sent by the UE 1. The UDM 21 may decide to send such SOR information if the UE 1's subscription data indicates that SOR information including optimal PLMN information for network slices is to be sent. Specifically, the priority of the PLMN information may be set in the list of VPLMNs included in the SOR information according to the priority of the HPLMN S-NSSAI concerned. For example, a PLMN that provides a network slice equivalent to the HPLMN S-NSSAI with the highest priority may be set as the highest priority in the SOR information. Here, the HPLMN S-NSSAI with the highest priority may mean the HPLMN S-NSSAI that is set to the first in the list of HPLM S-NSSAIs sent by the UE 1. Setting the PLMN as the highest priority in the SOR information may mean setting the PLMN as the first in the list of preferred PLMN/access technology combinations. A PLMN providing a network slice equivalent to the HPLMN S-NSSAI with priority set at nth may be set as the nth priority in the SOR information. Here, the HPLMN S-NSSAI with priority set at nth may mean the HPLMN S-NSSAI set at nth in the list of HPLM S-NSSAIs sent by the UE 1. Setting the PLMN as the nth priority in the SOR information may mean that the PLMN is set as the nth in the list of preferred PLMN/access technology combinations.

Alternatively, the SOR information may include a list indicating at least one VPLMN that can provide a network slice equivalent to the network slice identified by the highest priority HPLMN S-NSSAI in the priority order of the HPLMN S-NSSAIs sent from the UE 1. The highest priority HPLMN S-NSSAI may be the HPLMN S-NSSAI with the highest priority in the list of HPLMN S-NSSAIs sent from the UE 1, and the first HPLMN S-NSSAI in the list of HPLMN S-NSSAIs sent from the UE 1.

Additionally or alternatively, the UDM 21 may decide to send the SOR information to the UE 1 based on the necessity indicated by the UE 1. Additionally or alternatively, the UDM 21 may decide to send the SOR information to the UE 1 based on the access technology type used by the UE 1 for communication. Additionally or alternatively, the UDM 21 may decide to send the SOR information to the UE 1 based on the location information regarding the UE 1.

In some implementations, the UDM 21 may determine the contents of the SOR information based on at least one of the following: the priority order (decreasing order) of the HPLMN S-NSSAIs sent by the UE 1, the necessity indicated by the UE 1, the access technology type used by the UE 1 for communication, and the location information regarding the UE 1.

In other implementations, in order to decide whether to send the SOR information to the UE 1, the UDM 21 may consider whether the priority information of the HPLMN S-NSSAI(s) sent by the UE 1 is present in the subscription data of the UE 1. For example, if the priority information associated with the HPLMN S-NSSAI(s) sent by the UE 1 is present in the subscription data and the serving VPLMN does not provide an equivalent network slice(s) to the network slice(s) identified by the HPLMN S-NSSAI(s), the UDM 21 may decide to send the SOR information to the UE 1. This SOR information contains a list indicating at least one VPLMN that can provide a network slice that is equivalent to the at least one network slice identified by the HPLMN S-NSSAI(s) concerned.

In another example, the UDM 21 may decide to send the SOR information to the UE 1 if no network slice equivalent to the HPLMN S-NSSAI that has the highest priority based on the priority information in the subscription data among multiple HPLMN S-NSSAIs sent by the UE 1 is provided by the serving VPLMN. This SOR information includes a list indicating at least one VPLMN that can provide a network slice equivalent to the network slice identified by the highest priority HPLMN S-NSSAI.

In another example, the UDM 21 may decide to send the SOR information to the UE 1 if the priority information associated with the HPLMN S-NSSAI(s) sent by the UE 1 is present in the subscription data. In addition to this, the UDM 21 may decide to send the SOR information to the UE 1 if the UE 1' s subscription data indicates that SOR information containing optimal PLMN information for network slices is to be sent to the UE 1. This SOR information contains a list indicating at least one VPLMN that can provide a network slice equivalent to the at least one network slice identified by the highest priority HPLMN S-NSSAI.

In other implementations, to decide whether or not to send the SOR information to the UE 1, the UDM 21 may consider whether or not the UE 1's subscription data indicates that SOR information containing optimal PLMN information for network slices is to be sent. Additionally or alternatively, in order to decide whether to send the SOR information to the UE 1, the UDM 21 may consider whether the operator policy indicates that SOR information is to be sent, although the UE 1's subscription data does not indicate that SOR information is to be sent.

In some implementations, the UDM 21 may choose not to send, or prohibit sending, the SOR information to the UE 1 if the priority information associated with the HPLMN S-NSSAI(s) sent by the UE 1 is not present in the subscription data.

The UDM 21 may interact with the SOR-AF 24 to prepare the list of preferred PLMN/access technology combinations (or secured packet) described above. In addition, the UDM 21 may interact with the AUSF 23 to prepare the SOR information described above.

In step 404, the UDM 21 sends a Nudm_SDM_Get response to the VPLMN AMF 32. The response contains the subscription data of the UE 1 (e.g., Access and Mobility Subscription data) containing the SOR information.

In step 405, the VPLMN AMF 32 sends the received SOR information transparently to the UE 1 via a registration accept message. The UE 1 receives the SOR information. The UE 1 then updates its "Operator Controlled PLMN Selector with Access Technology" list with the list of preferred PLMN/access technology combinations included in the SOR information. In this case, if the UE 1 is in automatic network selection mode and the UE 1 determines based on the list that there is a higher priority VPLMN than the current serving VPLMN (camped VPLMN), the UE 1 attempts to obtain a service on the higher priority VPLMN.

In step 405, the UE 1 may update its "Slice-aware PLMN Selector with Access Technology" list with the list of preferred PLMN/access technology combinations included in the SOR information. In this case, if the UE 1 is in automatic network selection mode and the UE 1 determines based on the list that there is a higher priority VPLMN than the current serving VPLMN (camped VPLMN), the UE 1 attempts to obtain a service on the higher priority VPLMN.

In some implementations, an NPN may be registered in the list of preferred PLMN/access technology combinations included in the SOR information. The NPN may be an SNPN or a PNI-NPN. Specifically, to indicate an SNPN, the list of preferred PLMN/access technology combinations may include a PLMN ID plus an NID. To indicate a PNI-NPN, the list of preferred PLMN/access technology combinations may include a CAG Identifier in addition to a PLMN ID.

### Third Embodiment

Configuration examples of a radio communication network according to the present embodiment are the same as those shown in Figures 1 and 2. This embodiment provides a specific example of the transmission of SOR information from the UDM 21 to the UE 1.

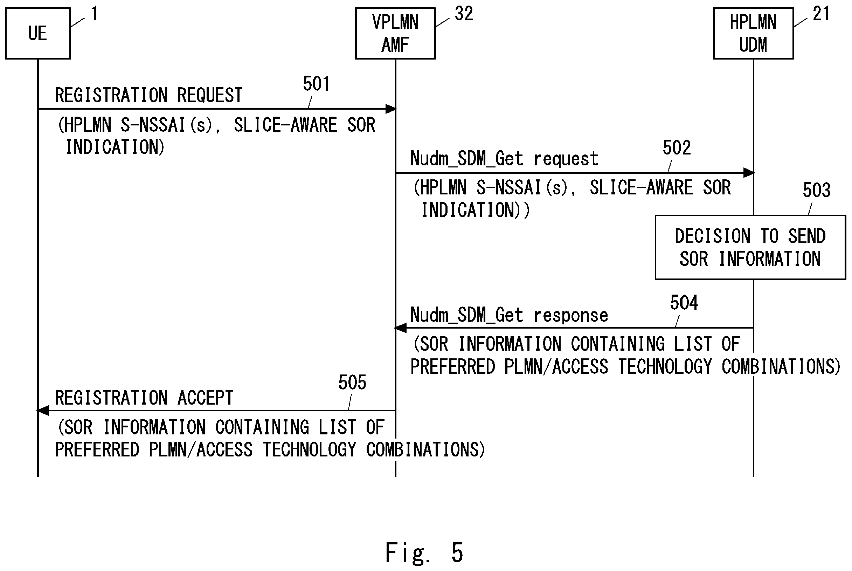

Figure 5 shows an example of the SOR information transmission in the present embodiment. In the example of Figure 5, the UE 1 sends an indication to the HPLMN UDM 21 via the VPLMN AMF 32, indicating that the UE 1 prefers PLMN selection that prioritizes network slice availability, in a registration procedure to any VPLMN. The PLMN selection that prioritizes network slice availability may be referred to as slice-aware PLMN selection. The indication may be referred to as an indication of slice-aware PLMN selection.

Specifically, in step 501, the UE 1 includes the indication in a NAS registration request message sent to the VPLMN AMF 32. The NAS registration request message may be one of "initial registration", "periodic registration updating", or "mobility registration updating". The NAS registration request message further contains at least one HPLMN network slice identifier (i.e., HPLMN S-NSSAI(s)). As in the second embodiment, such HPLMN S-NSSAI(s) may be included in a Mapping Of Requested NSSAI in the NAS registration request message. The inclusion of HPLMN S-NSSAI(s) in the Mapping Of Requested NSSAIs may mean that the HPLMN S-NSSAI(s) is set in the Mapped S-NSSAI of the Requested NSSAI. Alternatively, such HPLMN S-NSSAI(s) may be included in a Requested NSSAI in the NAS registration request message.

In some implementations, the UE 1 may set HPLMN S-NSSAIs in priority order (decreasing order) in a Requested NSSAI included in the NAS registration request message. In some implementations, the UE 1 may set an HPLMN S-NSSAI in the Requested NSSAI along with data indicating that it is a required network slice (mandatory) or other (optional) as the UE 1.

In step 502, the VPLMN AMF 32 performs (or invokes) a Nudm_SDM_Get service operation to the HPLMN UDM 21 to obtain the subscriber data of the UE 1. The message (Nudm_SDM_Get request) sent from the AMF 32 to the UDM 21 in step 502 indicates the indication and HPLMN S-NSSAI(s) sent by the UE 1. In some implementations, the AMF 32 may include an access technology type to indicate the access technology with which the UE 1 communicates with the AN 35, into the message sent from the AMF 32 to the UDM 21 (Nudm_SDM_Get request). In some implementations, the AMF 32 may include location information about the UE 1 into the message sent from the AMF 32 to the UDM 21 (Nudm_SDM_Get request). The location information about the UE 1 may be the VPLMN ID of the VPLMN including the MCC and MNC, the MCC of the VPLMN ID, the ECGI of the AN 35 to which the UE 1 is connected, the NCGI of the AN 35 to which the UE 1 is connected, or any other information indicating a region.

In step 503, the HPLMN UDM 21 decides whether or not to send SOR information to the UE 1. In some implementations, the UDM 21 may decide to send the SOR information to if the UDM 21 receives the indication of slice-aware PLMN selection from the UE 1 and if the serving VPLMN does not provide a network slice equivalent to the at least one network slice identified by the HPLMN S-NSSAI(s) sent by the UE 1. The SOR information includes a list of preferred PLMN/access technology combinations (or a secured packet). The list of preferred PLMN/access technology combinations indicates at least one VPLMN that can provide a network slice equivalent to the at least one network slice identified by the HPLMN S-NSSAI(s) sent by the UE 1.

In some implementations, the UDM 21 may decide to send the SOR information including optimal PLMN information for the at least one network slice identified by the HPLMN S-NSSAI(s) sent by the UE 1 to the UE 1. In addition to this, the UDM 21 may decide to send the relevant SOR information based on the indication of slice-aware PLMN selection sent by the UE 1.

In some implementations, the UDM 21 may decide to send the SOR information to the UE 1 based on the priority order (decreasing order) of the HPLMN S-NSSAI sent by the UE 1. In addition to this, the UDM 21 may decide to send the relevant SOR information based on the indication of slice-aware PLMN selection sent by the UE1. Specifically, the priority of the PLMN information may be set in the list of VPLMNs included in the SOR information according to the priority of the HPLMN S-NSSAI concerned. For example, a PLMN that provides a network slice equivalent to the HPLMN S-NSSAI with the highest priority may be set as the highest priority in the SOR information. Here, the HPLMN S-NSSAI with the highest priority may mean the HPLMN S-NSSAI that is set to the first in the list of HPLM S-NSSAIs sent by the UE 1. Setting the PLMN as the highest priority in the SOR information may mean setting the PLMN as the first in the list of preferred PLMN/access technology combinations. A PLMN providing a network slice equivalent to the HPLMN S-NSSAI with priority set at nth may be set as the nth priority in the SOR information. Here, the HPLMN S-NSSAI with priority set at nth may mean the HPLMN S-NSSAI set at nth in the list of HPLM S-NSSAIs sent by the UE 1. Setting the PLMN as the nth priority in the SOR information may mean that the PLMN is set as the nth in the list of preferred PLMN/access technology combinations.

Alternatively, the SOR information may include a list indicating at least one VPLMN that can provide a network slice equivalent to the network slice identified by the highest priority HPLMN S-NSSAI in the priority order of the HPLMN S-NSSAIs sent from the UE 1. The highest priority HPLMN S-NSSAI may be the HPLMN S-NSSAI with the highest priority in the list of HPLMN S-NSSAIs sent from the UE 1, and the first HPLMN S-NSSAI in the list of HPLMN S-NSSAIs sent from the UE 1.

In some implementations, the UDM 21 may determine the contents of the SOR information based on at least one of the following: the priority order (decreasing order) of the HPLMN S-NSSAIs sent by the UE 1, the necessity indicated by the UE 1, the access technology type used by the UE 1 for communication, and the location information regarding the UE 1.

In some implementations, the UDM 21 may choose not to send, or prohibit sending, the SOR information to the UE 1 if it does not receive the indication from the UE 1 indicating the slice-aware PLMN selection.

In other implementations, to decide whether to send the SOR information to the UE 1, the UDM 21 may further consider whether the subscription data of the UE 1 indicates that the HPLMN S-NSSAI(s) sent by the UE 1 are subject to the slice-aware PLMN selection. Specifically, the UDM 21 may decide to send the SOR information to the UE 1 if at least one of the one or more HPLMN S-NSSAIs sent by the UE 1 is subject to the slice-aware PLMN selection and a network slice equivalent to the network slice identified by this HPLMN S-NSSAI is not provided by the serving VPLMN. This SOR information includes a list indicating at least one VPLMN that can provide an equivalent network slice to the at least one network slice identified by the HPLMN S-NSSAI(s) that is subject to the slice-aware PLMN selection.

In other implementations, to decide whether or not to send the SOR information to the UE 1, the UDM 21 may consider whether or not the UE 1's subscription data indicates that SOR information containing optimal PLMN information for network slices is to be sent. Additionally or alternatively, in order to decide whether to send the SOR information to the UE 1, the UDM 21 may consider whether the operator policy indicates that SOR information is to be sent, although the UE 1's subscription data does not indicate that SOR information is to be sent.

In some implementations, the UDM 21 may decide whether to send the SOR information or may decide the content of the SOR information or may decide both, based on whether or not the subscription data of the UE 1 indicates that the HPLMN S-NSSAI(s) sent by the UE 1 is subject to the slice-aware PLMN selection, and whether or not the indication of slice-aware PLMN selection is received. The indication of slice-aware PLMN selection may mean that the UE 1 prefers PLMN selection that prioritizes network slice availability. No indication of slice-aware PLMN selection may mean that the UE 1 does not wish to perform PLMN selection that prioritizes network slice availability.

For example, if the UDM 21 receives the indication of slice-aware PLMN selection from the UE 1, it means that the PLMN selection by the UE 1 prioritizes (or considers) the availability of slice services. Accordingly, for example, if HPLMN S-NSSAIs including S-NSSAI#1 and S-NSSAI#2 are received from the UE 1, if the subscription data indicates that S-NSSAI#1 is subject to slice-aware NW selection, and if S-NSSAI#2 is included in an Allowed NSSAI and S-NSSAI#1 is included in a Rejected NSSAI, then the UDM 21 may inform the UE 1 of SOR information (Slice-aware PLMN selection information (list of PLMNs)) indicating availability of slice services in S-NSSAI#1 Here, to indicate the availability of slice services in S-NSSAI#1, the SOR information may include information of a PLMN that supports S-NSSAI#1 (i.e., can provide a network slice equivalent to the network slice of the HPLMN identified by S-NSSAI#1). On the other hand, if the UDM 21 does not receive the indication of slice-aware PLMN selection from the UE 1, it means that the PLMN selection by the UE 1 does not prioritize (or consider) the availability of slice service. Accordingly, for example, if HPLMN S-NSSAIs including S-NSSAI#1 and S-NSSAI#2 are received from the UE 1, if the subscription data indicates that S-NSSAI#1 is subject to slice-aware NW selection, and even if S-NSSAI#2 is included in an Allowed NSSAI and S-NSSAI#1 is included in a Rejected NSSAI, then the UDM 21 does not have to inform the UE 1 of SOR information (Slice-aware PLMN selection information (list of PLMNs)) indicating the availability of slice services in S-NSSAI#1.

Steps 504 and 505 are similar to steps 404 and 405 in Figure 4.

In some implementations, an NPN may be registered in the list of preferred PLMN/access technology combinations included in the SOR information. The NPN may be an SNPN or a PNI-NPN. Specifically, to indicate an SNPN, the list of preferred PLMN/access technology combinations may include a PLMN ID plus an NID. To indicate a PNI-NPN, the list of preferred PLMN/access technology combinations may include a CAG Identifier in addition to a PLMN ID.

According to the procedure in Figure 5, the HPLMN 20 (UDM 21) can provide the UE 1 with SOR information (e.g., list of preferred PLMN/access technology combinations) adapted to slice-aware PLMN selection only if the UE 1 prefers PLMN selection that prioritizes network slice availability.

The procedure in Figure 5 may be modified as follows. In step 501, the UE 1 may encrypt the indication of slice-aware PLMN selection using an encryption key of the HPLMN 20. The encrypted indication is sent to the HPLMN UDM 21 transparently through the VPLMN AMF 32. More specifically, the UE 1 may encrypt the indication with a public key of the HPLMN 20, and the UDM 21 may decrypt the indication with the corresponding private key of the HPLMN 20. This prevents the VPLMN 30 from knowing the policy of the HPLMN 20 regarding slice-aware PLMN selection.

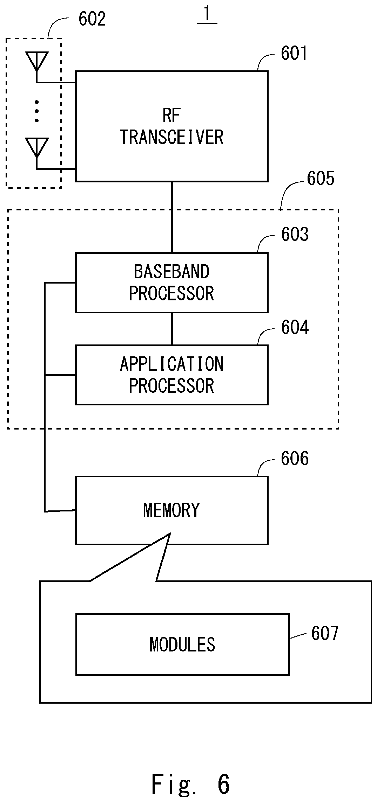

The following provides configuration examples of the UE 1 and the UDM 21 according to the above-described embodiments. Figure 6 is a block diagram showing a configuration example of the UE 1. A Radio Frequency (RF) transceiver 601 performs analog RF signal processing to communicate with RAN nodes. The RF transceiver 601 may include a plurality of transceivers. The analog RF signal processing performed by the RF transceiver 601 includes frequency up-conversion, frequency down-conversion, and amplification. The RF transceiver 601 is coupled to an antenna array 602 and a baseband processor 603. The RF transceiver 601 receives modulated symbol data (or OFDM symbol data) from the baseband processor 603, generates a transmission RF signal, and supplies the transmission RF signal to the antenna array 602. Further, the RF transceiver 601 generates a baseband reception signal based on a reception RF signal received by the antenna array 602 and supplies the baseband reception signal to the baseband processor 603. The RF transceiver 601 may include an analog beamformer circuit for beam forming. The analog beamformer circuit includes, for example, a plurality of phase shifters and a plurality of power amplifiers.

The baseband processor 603 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame) (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 603 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. Further, the control-plane processing performed by the baseband processor 603 may include processing of Non-Access Stratum (NAS) protocols, Radio Resource Control (RRC) protocols, MAC Control Elements (CEs), and Downlink Control Information (DCIs).

The baseband processor 603 may perform Multiple Input Multiple Output (MIMO) encoding and pre-coding for beam forming.

The baseband processor 603 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 604 described in the following.

The application processor 604 is also referred to as a CPU, an MPU, a microprocessor, or a processor core. The application processor 604 may include a plurality of processors (or processor cores). The application processor 604 loads a system software program (Operating System (OS)) and various application programs (e.g., a call application, a WEB browser, a mailer, a camera operation application, and a music player application) from a memory 606 or from another memory (not shown) and executes these programs, thereby providing various functions of the UE 1.

In some implementations, as represented by a dashed line (605) in Figure 6, the baseband processor 603 and the application processor 604 may be integrated on a single chip. In other words, the baseband processor 603 and the application processor 604 may be implemented in a single System on Chip (SoC) device 605. An SoC device may be referred to as a Large-Scale Integration (LSI) or a chipset.

The memory 606 is a volatile memory, a non-volatile memory, or a combination thereof. The memory 606 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 606 may include, for example, an external memory device that can be accessed from the baseband processor 603, the application processor 604, and the SoC 605. The memory 606 may include an internal memory device that is integrated in the baseband processor 603, the application processor 604, or the SoC 605. Further, the memory 606 may include a memory in a Universal Integrated Circuit Card (UICC).

The memory 606 may store one or more software modules (computer programs) 607 including instructions and data to perform the processing by the UE 1 described in the above embodiments. In some implementations, the baseband processor 603 or the application processor 604 may load these software modules 607 from the memory 606 and execute the loaded software modules, thereby performing the processing of the UE 1 described in the above embodiments with reference to the drawings.

The control-plane processing and operations performed by the UE 1 described in the above embodiments can be achieved by elements other than the RF transceiver 601 and the antenna array 602, i.e., achieved by the memory 606, which stores the software modules 607, and one or both of the baseband processor 603 and the application processor 604.

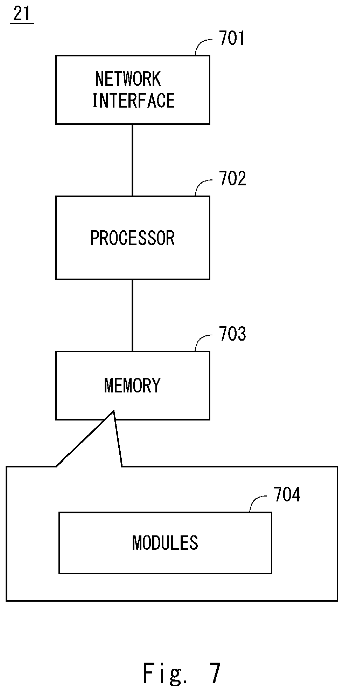

Figure 7 is a block diagram showing a configuration example of the AMF 3. Other network elements such as the AUSF 23, AF 24 (e.g., SOF-AF), AMF 32, and NSSF 34 may have a similar configuration to that shown in Figure 7. Referring to Figure 7, the UDM 21 includes a network interface 701, a processor 702, and a memory 703. The network interface 701 is used to communicate, for example, with other network functions (NFs) or nodes. The network interface 701 may include, for example, a network interface card (NIC) conforming to the IEEE 802.3 series.

The processor 702 may be, for example, a microprocessor, a Micro Processing Unit (MPU), or a Central Processing Unit (CPU). The processor 702 may include a plurality of processors.

The memory 703 is composed of a volatile memory and a nonvolatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 703 may include a storage located apart from the processor 702. In this case, the processor 702 may access the memory 703 via the network interface 701 or an I/O interface (not shown).

The memory 703 may store one or more software modules (computer programs) 704 including instructions and data to perform the processing of the UDM 21 described in the above embodiments. In some implementations, the processor 702 may be configured to load the one or more software modules 704 from the memory 703 and execute the loaded software modules, thereby performing the processing of the UDM 21 described in the above embodiments.

The User Equipment (UE) in the present disclosure is an entity to be connected to a network via a wireless interface. It should be noted that the radio terminal (UE) in the present disclosure is not limited to a dedicated communication device, and it may be any device as follows having the communication functions herein explained.

The terms "User Equipment (UE)" (as the term is used by 3GPP), "mobile station", "mobile terminal", "mobile device", and "radio terminal (wireless device)" are generally intended to be synonymous with one another. The UE may include standalone mobile stations, such as terminals, cell phones, smartphones, tablets, cellular IoT (internet of things) terminals, and IoT devices. It will be appreciated that the terms "UE" and "radio terminal" also encompass devices that remain stationary for a long period of time.

A UE may, for example, be an item of equipment for production or manufacture and/or an item of energy related machinery (for example equipment or machinery such as: boilers; engines; turbines; solar panels; wind turbines; hydroelectric generators; thermal power generators; nuclear electricity generators; batteries; nuclear systems and/or associated equipment; heavy electrical machinery; pumps including vacuum pumps; compressors; fans; blowers; oil hydraulic equipment; pneumatic equipment; metal working machinery; manipulators; robots and/or their application systems; tools; molds or dies; rolls; conveying equipment; elevating equipment; materials handling equipment; textile machinery; sewing machines; printing and/or related machinery; paper projecting machinery; chemical machinery; mining and/or construction machinery and/or related equipment; machinery and/or implements for agriculture, forestry and/or fisheries; safety and/or environment preservation equipment; tractors; bearings; precision bearings; chains; gears; power transmission equipment; lubricators; valves; pipe fittings; and/or application systems for any of the previously mentioned equipment or machinery etc.).

A UE may, for example, be an item of transport equipment (for example transport equipment such as: rolling stocks; motor vehicles; motorcycles; bicycles; trains; buses; carts; rickshaws; ships and other watercraft; aircraft; rockets; satellites; drones; balloons etc.).

A UE may, for example, be an item of information and communication equipment (for example information and communication equipment such as: electronic computer and related equipment; communication and related equipment; electronic components etc.).

A UE may, for example, be an item of refrigeration equipment, a refrigeration application product and equipment, trade and/or service industry equipment, a vending machine, an automatic service machine, an office machine or equipment, a consumer electronic and electronic appliance (for example a consumer electronic appliance such as: audio equipment; a speaker; a radio; video equipment; a television; an oven range; a rice cooker; a coffee maker; a dishwasher; a washing machine; dryers, a fan, an exhaust fan and related products, a vacuum cleaner etc.).

A UE may, for example, be an electrical application system or equipment (for example an electrical application system or equipment such as: an x-ray system; a particle accelerator; radio isotope equipment; sonic equipment; electromagnetic application equipment; electronic power application equipment etc.).

A UE may, for example, be an electronic lamp, a luminaire, a measuring instrument, an analyzer, a tester, or a surveying or sensing instrument (for example a surveying or sensing instrument such as: a smoke alarm; a human alarm sensor; a motion sensor; a wireless tag etc.), a watch or clock, a laboratory instrument, optical apparatus, medical equipment and/or system, a weapon, an item of cutlery, a hand tool, or the like.

A UE may, for example, be a wireless-equipped personal digital assistant or related equipment (such as a wireless card or module designed for attachment to or for insertion into another electronic device (for example a personal computer, electrical measuring machine)).

A UE may be a device or a part of a system that provides applications, services, and solutions described below, as to "internet of things (IoT)", using a variety of wired and/or wireless communication technologies. Internet of Things devices (or "things") may be equipped with appropriate electronics, software, sensors, network connectivity, and/or the like, which enable these devices to collect and exchange data with each other and with other communication devices. IoT devices may comprise automated equipment that follow software instructions stored in an internal memory. IoT devices may operate without requiring human supervision or interaction. IoT devices might also remain stationary and/or inactive for a long period of time. IoT devices may be implemented as a part of a (generally) stationary apparatus. IoT devices may also be embedded in non-stationary apparatus (e.g., vehicles) or attached to animals or persons to be monitored/tracked. It will be appreciated that IoT technology can be implemented on any communication devices that can connect to a communications network for sending/receiving data, regardless of whether such communication devices are controlled by human input or software instructions stored in memory. It will be appreciated that IoT devices are sometimes also referred to as Machine-Type Communication (MTC) devices, Machine-to-Machine (M2M) communication devices, or Narrow Band-IoT (NB-IoT) UE.

It will be appreciated that a UE may support one or more IoT or MTC applications.

Some examples of MTC applications are listed in 3GPP TS 22.368 V13.2.0 (2017-01-13), Annex B (the contents of which are incorporated herein by reference). This list is not exhaustive and is intended to be indicative of some examples of MTC applications. In this list, the Service Area of the MTC applications includes Security, Tracking & Tracing, Payment, Health, Remote Maintenance/Control, Metering, and Consumer Devices.

Examples of the MTC applications regarding Security include Surveillance systems, Backup for landline, Control of physical access (e.g., to buildings), and Car/driver security.

Examples of the MTC applications regarding Tacking & Tracing include Fleet Management, Order Management, Telematics insurance: Pay as you drive (PAYD), Asset Tracking, Navigation, Traffic information, Road tolling, and Road traffic optimisation/steering.

Examples of the MTC applications regarding Payment include Point of sales (POS), Vending machines, and Gaming machines.

Examples of the MTC applications regarding Health include Monitoring vital signs, Supporting the aged or handicapped, Web Access Telemedicine points, and Remote diagnostics.

Examples of the MTC applications regarding Remote Maintenance/Control include Sensors, Lighting, Pumps, Valves, Elevator control, Vending machine control, and Vehicle diagnostics.

Examples of the MTC applications regarding Metering include Power, Gas, Water, Heating, Grid control, and Industrial metering.

Examples of the MTC applications regarding Consumer Devices include Digital photo frame, Digital camera, and eBook.

Applications, services, and solutions may be an Mobile Virtual Network Operator (MVNO) service/system, an emergency radio communication service/system, a Private Branch eXchange (PBX) service/system, a PHS/Digital Cordless Telecommunications service/system, a Point of sale (POS) service/system, an advertise calling service/system, a Multimedia Broadcast and Multicast Service (MBMS) service/system, a Vehicle to Everything (V2X) service/system, a train radio service/system, a location related service/system, a Disaster/Emergency Wireless Communication Service/system, an Internet of Things (IoT) service/system, a community service/system, a video streaming service/system, a femto cell application service/system, a Voice over LTE (VoLTE) service/system, a radio tag service/system, a charging service/system, a radio on demand service/system, a roaming service/system, an activity monitoring service/system, a telecom carrier/communication NW selection service/system, a functional restriction service/system, a Proof of Concept (PoC) service/system, a personal information management service/system, a display video service/system, a non-communication service/system, an ad-hoc network/ Delay Tolerant Networking (DTN) service/system, etc.

The above-described UE categories are merely examples of applications of the technical ideas and embodiments described in the present disclosure. The UE described in this disclosure is not limited to these examples and various modifications can be made thereto by those skilled in the art.

The above-described embodiments are merely examples of applications of the technical ideas obtained by the inventors. These technical ideas are not limited to the above-described embodiments and various modifications can be made thereto.

The whole or part of the embodiments disclosed above can be described as, but not limited to, the following supplementary notes.

### (Supplementary Note 1)

A network node associated with a first Public Land Mobile Network (PLMN), comprising:
at least one memory; and
at least one processor coupled to the at least one memory and configured to:
   prepare a list indicating at least one Visited PLMN (VPLMN) that is capable of providing an equivalent network slice to a first network slice of the first PLMN; and
   send the list to a User Equipment (UE) via a second PLMN to cause the UE to prioritize the at least one VPLMN in PLMN selection, wherein
      the first PLMN is a Home PLMN (HPLMN) of the UE, and
      the second PLMN is a PLMN different from the first PLMN.

### (Supplementary Note 2)

The network node according to Supplementary Note 1, wherein the at least one processor is configured to send the list to the UE in a case where the at least one processor receives an identifier of the first network slice from the UE via the second PLMN during a registration procedure of the UE to the second PLMN and the second PLMN does not provide the equivalent network slice.

### (Supplementary Note 3)

The network node according to Supplementary Note 2, wherein the at least one processor is configured to determine whether to send the list to the UE based on priority information of the first network slice included in subscriber data of the UE.

### (Supplementary Note 4)

The network node according to Supplementary Note 3, wherein the at least one processor is configured to send the list to the UE in a case where the at least one processor receives an identifier of at least one other network slice of the first PLMN in addition to the first network slice from the UE via the second PLMN in the registration procedure of the UE to the second PLMN, the subscriber data indicates that the first network slice is prioritized over all of the other at least one network slice, and the second PLMN does not provide the equivalent network slice.

### (Supplementary Note 5)

The network node according to any one of Supplementary Notes 2 to 4, wherein the identifier of the first network slice of the first PLMN is sent to the second PLMN in the registration procedure.

### (Supplementary Note 6)

The network node according to any one of Supplementary Notes 1 to 5, wherein the at least one processor is configured to send the list to the UE in a case where the at least one processor receives from the UE, via the second PLMN, an indication indicating that the UE prefers PLMN selection that prioritizes network slice availability.

### (Supplementary Note 7)

The network node according to Supplementary Note 6, wherein the indication is encrypted by the UE using an encryption key of the first PLMN.

### (Supplementary Note 8)

The network node according to any one of Supplementary Notes 1 to 7, wherein
the at least one processor is configured to send the list, per network slice, indicating at least one VPLMN that is capable of providing an equivalent network slice to that network slice, to the UE via the second PLMN, and
the list corresponding to the first network slice is considered in the PLMN selection by the UE when the UE prefers the first network slice.

### (Supplementary Note 9)

The network node according to any one of Supplementary Notes 1 to 8, wherein the network node includes at least one of a Unified data management (UDM) and Steering of Roaming Application Function (SOR-AF) of the first PLMN.

### (Supplementary Note 10)

A User Equipment (UE) comprising:
at least one memory; and
at least one processor coupled to the at least one memory and configured to:
   send an indication indicating that the UE prefers Public Land Mobile Network (PLMN) selection that prioritizes network slice availability, to a network node of a first PLMN that is a Home PLMN (HPLMN) of the UE, via a second PLMN that is different from the first PLMN.

### (Supplementary Note 11)

The UE according to Supplementary Note 10, wherein the at least one processor is configured to encrypt the indication using an encryption key of the first PLMN.

### (Supplementary Note 12)

The UE according to Supplementary Note 10 or 11, wherein the at least one processor is configured to send the indication, in a registration procedure of the UE to the second PLMN.

### (Supplementary Note 13)

The UE according to Supplementary Note 12, wherein the at least one processor is configured to send an identifier of the first network slice of the first PLMN to the second PLMN in the registration procedure.

### (Supplementary Note 14)

The UE according to Supplementary Note 13, wherein the at least one processor is configured to, if the at least one processor send the indication and the identifier of the first network slice, receive from the network node, via the second PLMN, a list indicating at least one Visited PLMN (VPLMN) that is capable of providing a network slice equivalent to the first network slice.

### (Supplementary Note 15)

The UE according to Supplementary Note 14, wherein the list is sent by the network node when the second PLMN does not provide the equivalent network slice.

### (Supplementary Note 16)

The UE according to any one of Supplementary Notes 10 to 15, wherein the at least one processor is configured to manage an Operator Controlled PLMN Selector with Access Technology data file per network slice of the first PLMN.

### (Supplementary Note 17)

A method performed by a network node associated with a first Public Land Mobile Network (PLMN), the method comprising:
preparing a list indicating at least one Visited PLMN (VPLMN) that is capable of providing an equivalent network slice to a first network slice of the first PLMN; and
sending the list to a User Equipment (UE) via a second PLMN to cause the UE to prioritize the at least one VPLMN in PLMN selection, wherein
   the first PLMN is a Home PLMN (HPLMN) of the UE, and
   the second PLMN is a PLMN different from the first PLMN.

### (Supplementary Note 18)

A method performed by a User Equipment (UE), the method comprising:
sending an indication indicating that the UE prefers Public Land Mobile Network (PLMN) selection that prioritizes network slice availability, to a network node of a first PLMN that is a Home PLMN (HPLMN) of the UE, via a second PLMN that is different from the first PLMN.

### (Supplementary Note 19)

A non-transitory computer readable medium storing a program that, when executed by a computer implemented in a network node associated with a first Public Land Mobile Network (PLMN), causes said computer to perform a method comprising:
preparing a list indicating at least one Visited PLMN (VPLMN) that is capable of providing an equivalent network slice to a first network slice of the first PLMN; and
sending the list to a User Equipment (UE) via a second PLMN to cause the UE to prioritize the at least one VPLMN in PLMN selection, wherein
   the first PLMN is a Home PLMN (HPLMN) of the UE, and
   the second PLMN is a PLMN different from the first PLMN.

### (Supplementary Note 20)

A non-transitory computer readable medium storing a program that, when executed by a computer implemented in a User Equipment (UE), causes said computer to perform a method comprising:
sending an indication indicating that the UE prefers Public Land Mobile Network (PLMN) selection that prioritizes network slice availability, to a network node of a first PLMN that is a Home PLMN (HPLMN) of the UE, via a second PLMN that is different from the first PLMN.

This application is based upon and claims the benefit of priority from Japanese Patent Application No. 2020-095520, filed on June 1, 2020, the disclosure of which is incorporated herein in its entirety by reference.

### Reference Signs List

- 1: UE
- 11: UICC
- 12: ME
- 20: HPLMN
- 21: UDM
- 22: UDR
- 23: AUSF
- 24: AF
- 30, 30A, 30B, 30C: VPLMN

## Claims

1. A network node associated with a first Public Land Mobile Network (PLMN), comprising:
at least one memory; and
at least one processor coupled to the at least one memory and configured to:
prepare a list indicating at least one Visited PLMN (VPLMN) that is capable of providing an equivalent network slice to a first network slice of the first PLMN; and
send the list to a User Equipment (UE) via a second PLMN to cause the UE to prioritize the at least one VPLMN in PLMN selection, wherein
the first PLMN is a Home PLMN (HPLMN) of the UE, and
the second PLMN is a PLMN different from the first PLMN.

2. The network node according to claim 1, wherein the at least one processor is configured to send the list to the UE in a case where the at least one processor receives an identifier of the first network slice from the UE via the second PLMN during a registration procedure of the UE to the second PLMN and the second PLMN does not provide the equivalent network slice.

3. The network node according to claim 2, wherein the at least one processor is configured to determine whether to send the list to the UE based on priority information of the first network slice included in subscriber data of the UE.

4. The network node according to claim 3, wherein the at least one processor is configured to send the list to the UE in a case where the at least one processor receives an identifier of at least one other network slice of the first PLMN in addition to the first network slice from the UE via the second PLMN in the registration procedure of the UE to the second PLMN, the subscriber data indicates that the first network slice is prioritized over all of the other at least one network slice, and the second PLMN does not provide the equivalent network slice.

5. The network node according to any one of claims 2 to 4, wherein the identifier of the first network slice of the first PLMN is sent to the second PLMN in the registration procedure.

6. The network node according to any one of claims 1 to 5, wherein the at least one processor is configured to send the list to the UE in a case where the at least one processor receives from the UE, via the second PLMN, an indication indicating that the UE prefers PLMN selection that prioritizes network slice availability.

7. The network node according to claim 6, wherein the indication is encrypted by the UE using an encryption key of the first PLMN.

8. The network node according to any one of claims 1 to 7, wherein
the at least one processor is configured to send the list, per network slice, indicating at least one VPLMN that is capable of providing an equivalent network slice to that network slice, to the UE via the second PLMN, and
the list corresponding to the first network slice is considered in the PLMN selection by the UE when the UE prefers the first network slice.

9. The network node according to any one of claims 1 to 8, wherein the network node includes at least one of a Unified data management (UDM) and Steering of Roaming Application Function (SOR-AF) of the first PLMN.

10. A User Equipment (UE) comprising:
at least one memory; and
at least one processor coupled to the at least one memory and configured to:
send an indication indicating that the UE prefers Public Land Mobile Network (PLMN) selection that prioritizes network slice availability, to a network node of a first PLMN that is a Home PLMN (HPLMN) of the UE, via a second PLMN that is different from the first PLMN.

11. The UE according to claim 10, wherein the at least one processor is configured to encrypt the indication using an encryption key of the first PLMN.

12. The UE according to claim 10 or 11, wherein the at least one processor is configured to send the indication, in a registration procedure of the UE to the second PLMN.

13. The UE according to claim 12, wherein the at least one processor is configured to send an identifier of the first network slice of the first PLMN to the second PLMN in the registration procedure.

14. The UE according to claim 13, wherein the at least one processor is configured to, if the at least one processor send the indication and the identifier of the first network slice, receive from the network node, via the second PLMN, a list indicating at least one Visited PLMN (VPLMN) that is capable of providing a network slice equivalent to the first network slice.

15. The UE according to claim 14, wherein the list is sent by the network node when the second PLMN does not provide the equivalent network slice.

16. The UE according to any one of claims 10 to 15, wherein the at least one processor is configured to manage an Operator Controlled PLMN Selector with Access Technology data file per network slice of the first PLMN.

17. A method performed by a network node associated with a first Public Land Mobile Network (PLMN), the method comprising:
preparing a list indicating at least one Visited PLMN (VPLMN) that is capable of providing an equivalent network slice to a first network slice of the first PLMN; and
sending the list to a User Equipment (UE) via a second PLMN to cause the UE to prioritize the at least one VPLMN in PLMN selection, wherein
the first PLMN is a Home PLMN (HPLMN) of the UE, and
the second PLMN is a PLMN different from the first PLMN.

18. A method performed by a User Equipment (UE), the method comprising:
sending an indication indicating that the UE prefers Public Land Mobile Network (PLMN) selection that prioritizes network slice availability, to a network node of a first PLMN that is a Home PLMN (HPLMN) of the UE, via a second PLMN that is different from the first PLMN.

19. A non-transitory computer readable medium storing a program that, when executed by a computer implemented in a network node associated with a first Public Land Mobile Network (PLMN), causes said computer to perform a method comprising:
preparing a list indicating at least one Visited PLMN (VPLMN) that is capable of providing an equivalent network slice to a first network slice of the first PLMN; and
sending the list to a User Equipment (UE) via a second PLMN to cause the UE to prioritize the at least one VPLMN in PLMN selection, wherein
the first PLMN is a Home PLMN (HPLMN) of the UE, and
the second PLMN is a PLMN different from the first PLMN.

20. A non-transitory computer readable medium storing a program that, when executed by a computer implemented in a User Equipment (UE), causes said computer to perform a method comprising:
sending an indication indicating that the UE prefers Public Land Mobile Network (PLMN) selection that prioritizes network slice availability, to a network node of a first PLMN that is a Home PLMN (HPLMN) of the UE, via a second PLMN that is different from the first PLMN.
